(19) Europäisches Patentamt
European Patent Office
Office européen des brevets

(11) Numéro de publication: **0 209 470 B1**

(12) **FASCICULE DE BREVET EUROPEEN**

(45) Date de publication du fascicule du brevet: **01.03.89**

(51) Int. Cl.⁴: **C 22 B 34/34**, C 22 B 60/02, C 22 B 3/00, C 01 G 39/00

(21) Numéro de dépôt: **86420152.0**

(22) Date de dépôt: **11.06.86**

(54) **Procédé de séparation, par précipitation, du molybdène contenu dans des solutions sulfuriques ou nitriques d'uranium.**

(30) Priorité: **13.06.85 FR 8509183**

(43) Date de publication de la demande: **21.01.87 Bulletin 87/4**

(45) Mention de la délivrance du brevet: **01.03.89 Bulletin 89/9**

(84) Etats contractants désignés: **DE GB**

(73) Titulaire: **URANIUM PECHINEY, Tour Manhattan, La Défense 2, 6, place de l'Iris,, F-92400 Courbevoie (FR)**

(72) Inventeur: **Bernasconi, Pascal, 38 Bd. d'Haussonville, F-54000 Nancy (FR)**
Inventeur: **Bessiere, Jacques, 6 Résidence La Haye - Veleine en Haye, F-54840 Gondreville (FR)**
Inventeur: **Blazy, Pierre, 18 Place de la Carrière, F-54000 Nancy (FR)**
Inventeur: **Jdid, El-Aid, 71 rue Sebou, Rabat Agdal (MA)**
Inventeur: **Martinez, Bernard, 6, rue Pierre Sire, F-11000 Narbonne (FR)**

(74) Mandataire: **Vanlaer, Marcel et al, PECHINEY 28, rue de Bonnel, F-69433 Lyon Cédex 3 (FR)**

(56) Documents cités:
**FR-A-1 496 439**
**FR-A-2 157 781**
**US-A-3 415 616**
**US-A-3 449 066**
**US-A-4 026 988**

**CHEMICAL ABSTRACTS, vol. 86, 1977, page 404, revendication no. 95769v, Columbus, Ohio, US; R.O. KOROB et al.: "Tungsten and molybdenum co-precipitation by alpha-benzoin oxime for activation analysis of tungsten. Use of molybdenum as tracer", & J. RADIOANAL. CHEM. 1976, 34(29), 329-33**
**CHEMICAL ABSTRACTS, vol. 99, 1983, page 720, revendication no. 151228a, Columbus, Ohio, US; T.P.S. ASARI et al.: "Precipitation of molybdenum alpha-benzoin oximate from homogeneous solution", & TALANTA 1983, 30(6), 423-6**
**CHEMICAL ABSTRACTS, vol. 66, 1967, page 8543, revendication no. 91363x, Columbus, Ohio, US; R.D. GARDNER et al.: "Gravimetric determination of molybdenum in uranium-molybdenum alloys with alpha-benzoinoxime", & SCI. TECH. AEROSPACE REPT., 3(24), 4106(1965)**
**CHEMICAL ABSTRACTS, vol. 99, 1983, page 670, revendication no. 98458x, Columbus, Ohio, US; C.I. WU et al.: "Differential pulse polarographic determination of trace molybdenum in uranium with alpha-benzoinoxime extraction", & J. CHIN. CHEM. SOC. (TAIPEI) 1983, 30(3), 173-8**
**CHEMICAL ABSTRACTS, vol. 88, 1978, page 739, revendication no. 163253r, Columbus, Ohio, US; C.S. REQUEJO: "Elimination of eight interfering radioisotopes in the epithermal neutron activation analysis of uranium", & PUBL. IEA 1977, 470, 10 pp.**
**CHEMICAL ABSTRACTS, vol. 74, 1971, page 605, revendication no. 133863h, Columbus, Ohio, US; H. YOSHIDA et al.: "Separation of molybdenum in fission products by solvent extraction and extraction chromatography", & BUNSEKI KAGAKU 1970, 19, 818-23**

**EP 0 209 470 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

L'invention concerne un procédé de séparation, par précipitation, du molybdène contenu dans des solutions sulfuriques ou nitriques au moyen d'un agent de précipitation organique.

L'homme de l'art sait que dans l'hydrométallurgie de l'uranium, les minerais d'uranium sont généralement attaqués par des acides tels que l'acide sulfurique, nitrique pour donner, après séparation des insolubles, des solutions d'uranium que l'on purifie au moyen de solvants organiques. De ces solvants, l'uranium est réextrait en milieu aqueux, puis précipité pour donner des concentrés uranifères. Ces concentrés sont à leur tour purifiés par dissolution dans l'acide nitrique. La solution résultante ayant été débarrassée des produits insolubles, est alors soumise à une opération d'extraction de l'uranium au moyen de solvants organiques. Des dits solvants, on réextrait l'uranium en milieu aqueux, puis on leur fait subir différents traitements qui conduisent à l'obtention soit de l'$UF_6$, soit du métal lui-même.

— Selon leur origine, les minerais ou les concentrés d'uranium peuvent contenir des quantités plus ou moins grandes de molybdène.

— Or, lors des deux dissolutions acides, le molybdène est dissous en même temps que l'uranium et le suit lors des traitements de purification par solvants organiques. Il y a donc pollution du produit final par le molydène. De plus, la présence de molybdène fixé à certains solvants crée des crasses qui gênent le fonctionnement de l'atelier et engendrent des pertes de solvant.

L'homme de l'art est donc confronté à un problème de séparation du molybdène contenu dans les solutions d'uranium pour éviter à la fois la formation de crasses, notamment lors de la réextraction et la pollution de l'$UF_6$ ou de l'uranium métal fabriqués.

Certes, ce problème a déjà trouvé de nombreuses solutions. On peut citer, par exemple celle qui figure dans l'USP 3 156 524 et qui consiste à traiter le solvant aminé contenant l'uranium et le molybdène avant réextraction par un oxydant de façon à empêcher la précipitation d'un complexe de molybdène molybdyle avec l'amine, source des crasses.

Si ce procédé permet d'éviter les crasses, il présente néanmoins l'inconvénient de nécessiter une séparation régulière du molybdène du solvant d'autant plus fréquente que la teneur en molybdène de la solution traitée est élevée, ce qui n'empêche pas pour autant la présence de molybdène dans l'uranium extrait.

Par ailleurs, le brevet FR 2 157 781 décrit un procédé d'obtention de molybdène 99 de haute pureté, dont une étape consiste à précipiter sélectivement le molybdène 99 à partir d'une solution sulfurique uranifère, à l'aide d'une solution sodique 0,4 N contenant 2% en poids d'α benzoineoxime, et à séparer le précipité obtenu par filtration.

C'est pourquoi la demanderesse consciente de l'insuffisance de ces solutions a cherché et trouvé un procédé permettant de séparer, par précipitation, le molybdène, d'une part, des solutions acides très riches en cet élément et qui peuvent provenir de l'attaque soit de minerais uranomolybdenifères, soit de concentrés, d'autre part, de solutions acides plus pauvres résultant de l'étape de réextraction en milieu aqueux de l'uranium provenant de la dissolution de concentré.

Ce procédé utilise comme agent de précipitation un produit appartenant à la famille des hydroxyoximes, de formule générale:

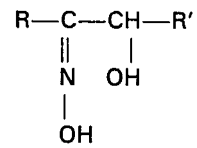

dans laquelle R et R' sont des chaînes alkyles, ethoxyalkyles aryles, benzylalkyles et telles que ces molécules soient solubles dans un solvant miscible à la solution acide à traiter, et il est caractérisé en ce qu'on choisit R et R' parmi les groupements présentant une certaine hydrophobicité conférant au précipité contenant le molybdène un caractère hydrophobe, et qu'on flotte ledit précipité.

Pour que l'agent de précipitation convienne, il faut qu'il puisse, en milieu acide, conduire à une précipitation complète du molybdène tout en laissant la totalité de l'uranium en solution aquese et il s'est avéré que les molécules de la famille des hydroxyoximes précédemment décrites étaient des réactifs de précipitation très sélectifs du molybdène en milieu acide n'ayant pas d'interférence sur l'uranium et qu'ils répondaient donc parfaitement au but recherché.

En particulier, l'α-benzoine oxime de formule:

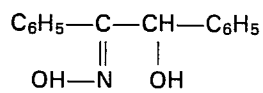

s'est montrée particulièrement intéressante.

Certes, il était déjà connu par le brevet US 3 449 066 qu'on pouvait récupérer le molybdène de solutions aqueuses acides à pH = 1,5 en les mettant en contact avec une phase aqueuse organique contenant une α-hydroxyoxime de formule:

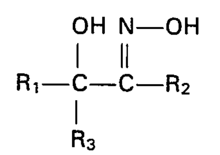

dans laquelle $R_1$, $R_2$ et $R_3$ sont des groupes alkyl de 1 à 14 atomes de carbone. Mais, il s'agit, d'une part, d'une séparation par extraction liquide et, d'autre part, la sélectivité par rapport à l'uranium n'est pas mise en évidence, puisque le brevet ne parle que de solutions de molybdène sans indiquer la présence d'autres ions tels que l'uranium.

A la différence, dans la présente invention, on procède à la formation d'un précipité par action chimique de l'hydroxyoxime sur le molybdène qui, dans les conditions d'acidité du milieu traité se trouve sous la forme d'ions $MoO_2^{2+}$.

Par exemple, dans le cas de l'α-benzoine oxime, la réaction est la suivante:

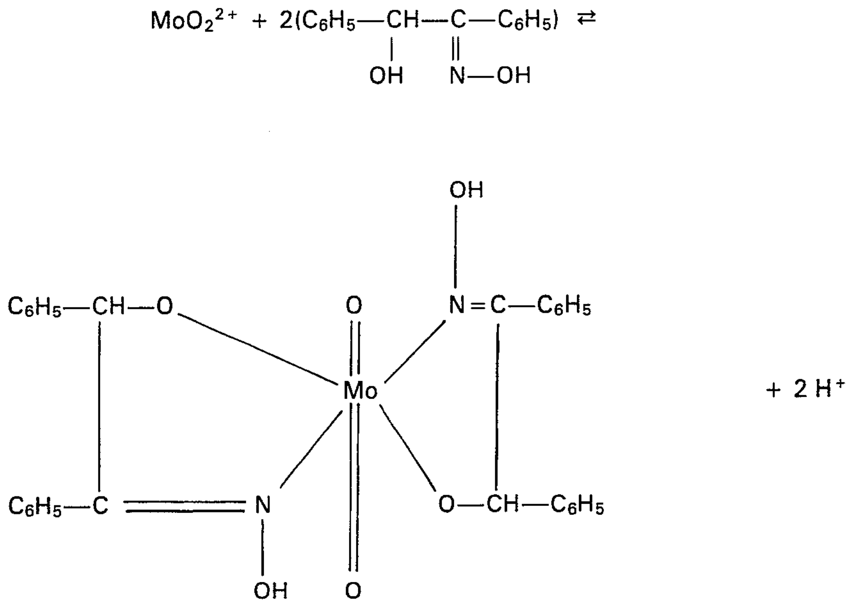

Il suffit donc d'ajouter à la solution d'uranium contenant le molybdène une hydroxyoxime pour provoquer la formation d'un précipité dans la solution.

Mais la demanderesse a ègalement trouvé que lorsque les groupements R et R' des hydroxyoximes présentaient une certaine hydrophobicité comme, par exemple, dans le cas de l'α-benzoine oxime, le précipité formé entre cette molécule et le molybdène pouvait être récupéré par flottation. Cette technique consiste à faire passer dans le milieu réactionnel un courant ascendant de bulles de gaz (air ou azote). En raison du caractère hydrophobe du précipité, celui-ci s'absorbe sur les bulles de gaz et remonte à la surface où il peut être recueilli à partir des mousses formées.

Le procédé selon l'invention conduit à des résultats particulièrement intéressants quand il est appliqué à des solutions contenant entre 0,05 et 3 valences gramme d'acide par litre, ce qui correspond aux acidités des solutions habituellement véhiculées dans les installations industrielles d'hydrométallurgie de l'uranium.

Dans un tel milieu et à une température n'excédant pas 40°C, la précipitation du molybdène par l'hydroxyoxime est pratiquement complète en moins de 15 minutes et sans interférence de l'uranium, pour des solutions contenant jusqu'à $1 \times 10^{-2}$ molécule gramme par litre de molybdène, c'est-à-dire 1 g/l et 2 molécules grammes par litre d'uranium soit près de 500 g/l.

La quantité d'hydroxyoxime mise en œuvre est variable en fonction de la teneur initiale en molybdène de la solution traitée et de la teneur finale qu'on veut obtenir. Ainsi, le rapport molaire hydroxyoxime/molybdène et désigné ici par Φ, peut être stoechiométrique, c'est-à-dire de 2 moles d'hydroxyoxime par mole de molybdène contenu jusqu'à 4 moles quand on admet de laisser dans la solution traitée des quantités de molybdène voisines de 100 mg/l.

Par contre cette quantité peut aller jusqu'à 5000 moles par mole de molybdène si on traite des solutions initialement très pauvres en molybdène et qu'on veut atteindre des teneurs très faibles et de l'ordre de 0,1 mg/l.

Ce procédé permet ainsi d'obtenir des teneurs en molybdène inférieures aux limites à ne pas dépasser pour répondre à la fois aux besoins de la technologie et aux contraintes commerciales et ce aux différentes étapes du cycle de l'uranium.

L'invention peut être illustrée à l'aide de la figure 1 qui représente en traits continus les différentes étapes du cycle de l'uranium à partir du minerai jusqu'à l'obtention de l'$UF_6$ ou un métal et sur laquelle ont été indiqués en traits discontinus les stades d'élimination du molybdène selon l'invention.

Cette figure a été partagée par un trait horizontal en deux parties I et II comprenant pour la première les étapes allant du minerai au concentré et la deuxième, les étapes de purification du concentré jusqu'à l'obtention du produit final.

En I, on voit un réacteur A dans lequel le minerai d'uranium $S_1$ est attaqué par un acide $L_1$ pour donner une suspension $L_2$ qui est séparée en B en un stérile $S_3$ et une liqueur $L_4$ contenant l'uranium et des impuretés solubles telles que le molybdène.

Cette liqueur $L_4$ est purifiée en C au moyen de solvants organiques qui extraient l'uranium, lesdits solvants étant ensuite traités par une solution aqueuse qui extrait l'uranium et donne la liqueur $L_5$ de laquelle on précipite en D un concentré $S_4$.

En II, le concentré $S_4$ est attaqué par l'acide nitrique $L_6$ en E pour donner une suspension $L_7$ de laquelle on sépare en F les insolubles $S_6$ et une liqueur $L_9$ que l'on traite par des solvants organiques en G pour extraire l'uranium sous forme d'une liqueur $L_{10}$ traitée à son tour en H par une solution aqueuse qui réextrait l'uranium et donne une liqueur $L_{10}$ qui fait l'objet de traitements particuliers en vue d'obtenir un produit final $S_9$ qui peut être l'$UF_6$ ou l'uranium métal.

Dans la présente invention, si on veut obtenir un concentré plus pauvre en molybdène, on envoie la liqueur $L_2$ dans un réacteur J dans lequel est introduit l'hydroxyoxime $S_2$ et où précipite le molybdène.

La suspension $L_3$ formée rejoint le circuit normal par B où on sépare à la fois les stériles et le Mo précipité avec l'hydroxyoxime. Dans une variante, la précipitation de Mo par $S_2$ est effectuée sur la solution sortant de B.

Le concentré peut à son tour être purifié en molybdène en envoyant la liqueur $L_7$ résultant de son attaque par l'acide nitrique dans un réacteur K où, à l'aide de l'hydroxyoxime $S_5$ on précipite le molydène pour obtenir une suspension $L_8$ qui rejoint le circuit normal pour être séparé en F en une phase solide $S_6$ et une liqueur d'uranium $L_9$ débarrassée de son molybdène qui est envoyée en G pour extraction de l'uranium.

Suivant les impératifs de qualité, la liqueur $L_{11}$ issue de la phase de réextraction en H peut également être dirigée vers un réacteur L où en présence de l'hydroxyoxime $S_7$ elle va donner lieu à la formation d'une suspension $L_{12}$ de laquelle on sépare en M, d'une part, le précipité $S_8$ d'hydroxyoxime et de molybdène, d'autre part la solution de nitrate d'uranyle purifié $L_{13}$ qui rejoint le circuit normal de traitement en I.

L'invention peut être illustrée à l'aide des exemples d'application suivants:

*Example 1*

Une solution industrielle d'attaque sulfurique de minerai uranifère d'acidité 0,2 N contenant 1,5 g/l d'uranium, 0,7 g/l de molybdène, 4 g/l de fer a été traitée par l'α-benzoine oxime suivant différents rapports molaires oxime/molybdène. Le milieu réactionnel a été soumis à une separation par flottation. La solution d'uranium récupérée après élimination des mousses formées a été analysée. Les résultats sont les suivants:

TABLEAU 1

| | Φ − 2 | Φ − 3 | Φ − 4 |
|---|---|---|---|
| Teneur Mo mg/l | 130 | 99 | 94 |

On constate que la solution d'attaque ainsi purifiée peut être traitée par extraction liquide-liquide sans risque de formation de crasses lors de la réextraction.

Cette invention trouve son application dans l'obtention de solutions d'uranium se prêtant facilement aux opérations d'extraction par solvant organique et de réextraction en phase aqueuse sans provoquer de crasses et dans la fabrication d'uranium de pureté nucléaire.

**Revendications**

1. Procédé de séparation du molybdène contenu dans des solutions sulfuriques ou nitriques d'uranium mettant en œuvre pour précipiter le molybdène un produit appartenant à la famille des hydroxyoximes, de formule générale R-C(=N-OH)-CH(-OH)-R' où R et R' sont des chaînes alkyles, ethoxyalkyles aryles, benzylalkyles, solubles dans un solvant miscible à la solution, caractérisé en ce qu'on choisit R et R' parmi les groupements présentant une certaine hydrophobicité conférant au précipité contenant le molybdène un caractère hydrophobe et qu'on flotte ledit précipité.

2. Procédé selon la revendication 1, caractérisé en ce que l'agent de précipitation est l'α-benzoine oxime.

3. Procédé selon la revendication 1, caractérisé en ce que les solutions sulfuriques ou nitriques contiennent 0,05 à 3 valences grammes d'acide par litre.

4. Procédé selon la revendication 1, caractérisé en ce que l'agent de précipitation est ajouté à la solution acide issue de l'attaque du minerai.

5. Procédé selon la revendication 1, caractérisé en ce que l'agent de précipitation est ajouté à la solution issue de la dissolution nitrique du concentré.

6. Procédé selon la revendication 1, caractérisé en ce que l'agent de précipitation est ajouté à la solution aqueuse de nitrate d'uranyle issue d'une étape de réextraction d'uranium.

7. Procédé selon la revendication 1, caractérisé en ce que l'agent de précipitation est utilisé en quantité comprise entre 2 et 5000 moles par mole de molybdène contenu dans la solution de départ.

**Patentansprüche**

1. Verfahren zur Trennung von in schwefelsauren oder salpetersauren Uranlösungen enthaltenem Molybdän durch Verwendung zur Fällung des Molybdäns eines Produkts der Familie der Hydroxyoxime der allgemeinen Formel

R-C(=N-OH)-CH(-OH)-R'

in der R und R' Alkyl-, Ethoxyalkylaryl- oder Benzylalkylketten bedeuten, die in einem mit der Lösung mischbaren Lösungsmittel löslich sind, dadurch gekennzeichnet, daß eine Verbindung der o.a. Formel gewählt wird, in der R und R' Gruppen mit einem gewissen hydrophoben Charakter sind, die dem das Molybdän enthaltenden Niederschlag einen hydrophoben Charakter verleihen und der Niederschlag flottiert wird.

2. Verfahren nach Anspruch 1, dadurch gekennzeichnet, daß α-Benzoinoxim als Fällungsmittel verwendet wird.

3. Verfahren nach Anspruch 1, dadurch gekennzeichnet, daß schwefelsaure oder salpetersaure Lösungen mit einem Säuregehalt von 0,05 bis 3 g Equivalent/l verwendet werden.

4. Verfahren nach Anspruch 1, dadurch gekennzeichnet, daß das Fällungsmittel zur sauren Lösung aus dem Erzaufschluss zugegeben wird.

5. Verfahren nach Anspruch 1, dadurch gekennzeichnet, daß das Füllungsmittel zur Lösung aus der salpetersauren Auflösung des Konzentrats zugegeben wird.

6. Verfahren nach Anspruch 1, dadurch gekennzeichnet, daß das Fällungsmittel der wäßrigen Uranylnitratlösung aus einer Stufe der Uranwiedergewinnung zugegeben wird.

7. Verfahren nach Anspruch 1, dadurch gekennzeichnet, daß das Fällungsmittel in einer Menge von 2 bis 5000 mol/mol in der Ausgangslösung enthaltenem Molybdän verwendet wird.

**Claims**

1. A process for separation of the molybdenum contained in sulphuric or nitric solutions of uranium using, for precipitating the molybdenum, a product which belongs to the family of hydroxyoximes of the general formula R-C( = N-OH)-CH(-OH)-R' in which R and R' are alkyl, ethoxyalkylaryl and benzylalkyl chains, which are soluble in a solvent which is miscible with the solution, characterised in that R and R' are selected from groups having a certain degree of hydrophobicity imparting a hydrophobic character to the precipitate containing the molybdenum, and that said precipitate is subjected to flotation.

2. A process according to claim 1, characterised in that the precipitation agent is α-benzoin oxime.

3. A process according to claim 1, characterised in that the sulphuric or nitric solutions contain from 0.05 to 3 gram valencies of acid per litre.

4. A process according to claim 1, characterised in that the precipitation agent is added to the acid solution resulting from the attack on the ore.

5. A process according to claim 1, characterised in that the precipitation agent is added to the solution resulting from nitric dissolution of the concentrate.

6. A process according to claim 1, characterised in that the precipitation agent is added to the aqueous solution of uranyl nitrate resulting from a uranium re-extraction step.

7. A process according to claim 1, characterised in that the precipitation agent is used in an amount of between 2 and 5000 moles per mole of molybdenum contained in the starting solution.

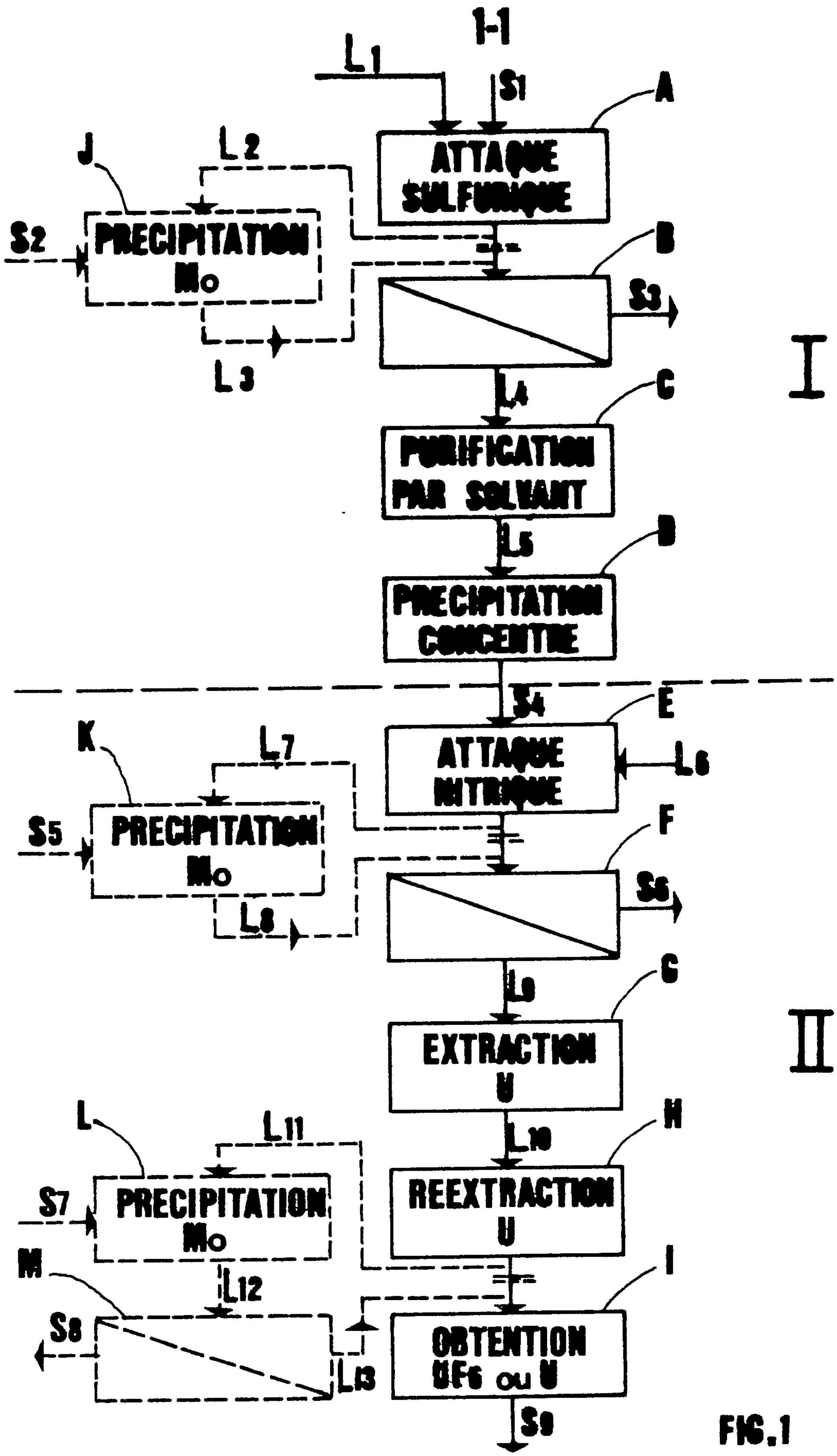
1-1
L1
S1
A
ATTAQUE SULFURIQUE
J
L2
S2
PRECIPITATION Mo
B
S3
L3
I
L4
C
PURIFICATION PAR SOLVANT
L5
D
PRECIPITATION CONCENTRE
S4
E
K
L7
ATTAQUE NITRIQUE
L6
S5
PRECIPITATION Mo
F
S6
L8
L9
G
EXTRACTION U
II
L
L11
L10
H
S7
PRECIPITATION Mo
REEXTRACTION U
M
L12
I
S8
L13
OBTENTION UF6 ou U
S9

FIG.1